# EUROPEAN PATENT APPLICATION

(11) **EP 4 806 550 A1**
(43) Date of publication of application: **16.09.2026**
(21) Application number: 26159805.6
(22) Date of filing: 20.02.2026
(51) Int. Cl.: B01J 20/30, B01D 53/02, B01J 20/04, B01J 20/06, B01J 20/32, B01J 21/10, B01J 23/00, B01J 23/78, B01J 23/745, B01J 37/02, B01J 37/08, B01J 37/16

(54) **METHOD FOR THE PRODUCTION OF BIFUNCTIONAL PARTICULATE SOLID MATERIAL**

(30) Priority: 12.03.2025 IT 202500005046
(71) Applicant: Università degli Studi dell'Aquila, 67100 L'Aquila (AQ) (IT)
(72) Inventor: GALLUCCI, Katia, 67100 L'Aquila (IT); DI GIULIANO, Andrea, 67100 L'Aquila (IT); MALSEGNA, Barbara, 67100 L'Aquila (IT); MATERAZZI, Massimiliano, 67100 L'Aquila (IT); SEBASTIANI, Alex, 67100 L'Aquila (IT)
(74) Representative: Studio Torta S.p.A.

(57) **Abstract**

A method for the production of bifunctional particulate solid material specifically for the Water-Gas Shift reaction and comprising the following phases in succession:
- a first calcination phase, in which a hydrotalcite material, with a molar ratio of Mg/Al between 2 and 4, undergoes a calcination treatment at a temperature between 400 and 500°C;
- a cooling phase, in which the hydrotalcite material coming from the calcination phase is brought to a temperature between 10 - 30°C in a humidity condition between 30-0% RH;
- a wet-impregnation phase, in which the hydrotalcite material from the cooling phase is mixed in water with K2CO3 and an Fe salt at a temperature between 30 and 90°C; K2CO3 is added in a quantity of between 10 and 25% by weight with respect to the weight of the hydrotalcite material from the cooling phase, and the iron salt is added in a quantity such that the elemental mass of Fe is between 1 and 15% by weight with respect to the weight of the hydrotalcite material from the cooling phase;
- a drying phase of the material coming from said wet-impregnation phase;
- a second calcination phase, in which the material coming from the drying phase is subjected to a temperature of between 400 and 500°C.

## Description

### CROSS-REFERENCE TO RELATED APPLICATIONS

This patent application claims priority from Italian patent application no. 102025000005046 filed on March 12, 2025, the entire disclosure of which is incorporated herein by reference.

### TECHNICAL FIELD

This invention relates to a method for preparing a particulate solid material with the function of a CO2 sorbent and catalyst.

The material consists of a mixture of magnesium and aluminium oxides of hydrotalcite origin, with potassium carbonate and iron additives.

In particular, the material that this invention concerns finds advantageous, but not exclusive, application in the Water-Gas Shift reaction (WGSR: H2O + CO 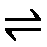 H2 + CO2), to which the description will explicitly refer without any loss of generality thereby.

Another aspect of this invention is the bifunctional particulate solid material itself.

### PRIOR ART

As is well known, in many industrial chemical processes, such as H2 production processes, there is a need to separate the CO2 formed among the reaction products, for both purification and yield reasons. This necessity requires the use and addition of unitary process steps and operations, as well as the associated, prepared equipment.

For example, in conventional H2 production processes based on hydrocarbon reforming, the post-reforming conditioning step has two WGS steps at high and low temperature among its main process steps. The two WGS steps are aimed at producing H2 from CO and H2O and involve, for example, two fixed-bed catalytic reactors comprising specific, dedicated catalysts with intermediate heat exchange, followed by other equipment and auxiliary unitary processes for CO2 capture, such as pressure swing adsorption or wet scrubbing with amine organic solvents and removal of residual CO by methanation. In post-WGS conditioning, additional operations are required to achieve high H2 purity, such as CO2 capture by scrubbing and/or pressure swing adsorption.

As can be easily understood, the use of additional processes, operations and equipment necessarily results in a disadvantage in terms of productivity and chemical and energy efficiency due to a lack of process integration.

In light of the above, the sorption-enhanced WSG (SEWGS) technology was developed a while ago; this combines a carbon dioxide capture process with a water-gas shift reaction in situ in order to produce a hydrogen-rich stream from synthesis and/or reformed gas. In-situ adsorption and removal of CO2 shift the equilibrium of the water-gas shift reaction, totally converting the carbon monoxide and maximising hydrogen production. In essence, SEWGS technology combines the water-gas shift reaction with carbon dioxide adsorption in a single reaction environment, bringing the advantages of process intensification (that is, a process with more integrated steps).

Specifically, SEWGS technology is based on pressure swing adsorption (PSA) or temperature swing adsorption (TSA) units, in which tanks are filled with a mixture consisting of a catalyst material and an adsorbent material, both in granular form. In the case of PSA, it is certainly advantageous to find CO2 sorbent materials that operate at the lowest possible capture pressures, ensuring energy savings on cyclic compressions.

SEWGS technology, therefore, operates with "two-compound systems", that is, with two different solid products (a sorbent-only solid and a catalytic-only solid) macroscopically mixed together and, in any case, divisible in two groups by different chemical and physical properties. As may be obvious to a person skilled in the art, the presence of concatenated and different reactive phenomena on particles of different compounds with respective, specific activities and functionalities necessarily entails the presence of resistance to the transport of matter and heat (intra-particle in the case of porous solids, and certainly inter-particle). Such resistance, of course, slows down the process as a whole.

Furthermore, it should be considered that each of the solids could have its own inert carrier, which is, in any case, inactive matter for the process. The presence of the inert carrier necessarily leads to a decrease in productivity per unit of reactor volume.

The need was therefore felt for a material whose technical characteristics would overcome the drawbacks of the prior art.

Furthermore, it must be considered that synthesis processes for granular solid materials, being developed on a laboratory scale by research institutions focused on the compositional fineness and detailed structure of the final product, have poor industrial scalability due to the synthesis methods chosen. In this regard, there was also a need to produce granular material according to a procedure that could be replicated on an industrial scale, thanks to the choice of simple unitary operations.

The inventors of this invention have produced a particulate solid material and a method for its synthesis capable of meeting the above requirements.

### DESCRIPTION OF THE INVENTION

This invention concerns a method for the production of bifunctional particulate solid material with CO2 sorbent and catalytic activity specifically for the Water-Gas Shift reaction;
said method being characterized by the fact that it comprises the following phases in succession:
- a first calcination phase, in which a hydrotalcite material, with a molar ratio of Mg/Al between 2 and 4, undergoes a calcination treatment at a temperature between 400 and 500°C;
- a cooling phase, in which the hydrotalcite material coming from the calcination phase is brought to a temperature between 10 - 30°C in a humidity condition between 30-0% RH;
- a wet-impregnation phase, in which the hydrotalcite material from the cooling phase is mixed in water with K2CO3 and an Fe salt at a temperature between 30 and 90 °C; K2CO3 being added in a quantity of between 10 and 25% by weight with respect to the weight of the hydrotalcite material from the cooling phase, and said iron salt being added in a quantity such that the elemental mass of Fe is between 1 and 15% by weight with respect to the weight of the hydrotalcite material from the cooling phase;
- a drying phase of the material coming from said wet-impregnation phase;
- a second calcination phase, in which the material coming from the drying phase is subjected to a temperature of between 400 and 500°C.

Said first and second calcination phases preferably involve a heating rate of between 1 and 10°C/min.

Said cooling phase preferably comprises:
- a first cooling sub-phase, in which the oxides from the calcination phase are brought to a temperature of between 100 and 150°C.
- a second cooling sub-phase, in which the oxides from the first cooling sub-phase are brought to a temperature of between 10 - 30°C.

Said wet-impregnation phase preferably comprises a first sub-phase, in which K2CO3 and the Fe salt are dispersed in water and mixed together at a temperature between 30 and 90°C, and a second sub-phase in which the calcined hydrotalcite solid from the cooling phase is added to the solution coming from the first sub-phase.

In said drying phase, the material is preferably subjected to a temperature between 100 and 130°C for a time between 21 and 48 h.

In said wet-impregnation phase, the quantity by weight of water is preferably between 6 and 10 times the quantity by weight of the calcined hydrotalcite material.

Said Fe salt is preferably ferric nitrate.

The method of this invention preferably comprises an activation phase, in which the material coming from said second calcination phase is subjected to the action of a reducing gas at a temperature between 300 and 500 °C.

In said activation phase, said reducing gas is preferably H2 and the temperature between 300-500°C is reached at a rate ranging between 1-20°C/min.

In said activation phase, H2 is preferably diluted in inert gas.

This invention also concerns a bifunctional particulate solid material with CO2 sorbent and catalytic activity, specifically for the Water-Gas Shift reaction; said particulate solid material being characterized in that it consists of xMg:yAl:zK:wFe where, x is between 25 and 45% by weight; y is between 8 and 18% by weight; z is between 4 and 12% by weight; w is between 0.8 and 12% by weight.

### BRIEF DESCRIPTION OF THE DRAWINGS

To better understand this invention, an embodiment is described below with the aid of the figures in the accompanying drawings, in which:
- Figure 1 is a graph of CO2 adsorption test results;
- Figure 2 is a graph of the results of catalysis tests of a WGS reaction with simultaneous CO2 adsorption (SEWGS - sorption-enhanced WGS).

### EMBODIMENTS OF THE INVENTION

### - Synthesis of the bifunctional particulate solid material -

10 g of hydrotalcite CH16Al2Mg6O19 (CAS No. 11097-59-9) was calcined in a muffle furnace at 450°C for 5 h (heating rate of 5°C/min). Subsequently, the calcined hydrotalcite was allowed to cool in a muffle furnace to 120°C and was then transferred to a laboratory desiccator to finish cooling down to room temperature in dry air so that the solid would not take on moisture. This resulted in 5.7 g of calcined solid.

1.1 g K2CO3 and 4.1 g Fe(NO3)3-9H2O were mixed in the presence of water in a beaker placed on a heated plate. The amount of water used was 46 ml.

The resulting solution was heated to 60°C and kept under agitation by rotation at 350 RPM. Once a temperature of 60°C was reached, the calcined hydrotalcite solid was added to the solution. The resulting new mixture was kept under agitation at 350 RPM at 60°C for 1 h (wet-impregnation).

The amount of K2CO3 used was 20% by weight of the solid obtained from calcination.

The amount of Fe(NO3)3-9H2O used was chosen to ensure that the elemental mass of Fe was 10% by weight of the solid obtained by calcination.

The amount of water used was eight times by weight the mass of calcined hydrotalcite solid.

After 1 h of wet-impregnation, the entire mass (solid + residual liquid) obtained was dried in an oven at 120°C for 24 h.

Subsequently, the mass of dried solid obtained as reported above was subjected to a calcination process by repeating exactly the above procedure for calcining hydrotalcite.

The above procedure yielded 7.5 g (~75% of the starting mass of hydrotalcite) of a material according to the invention, which will be identified below as 20K10FeHT, according to the inventors.

The representative elemental composition of 20K10FeHT is shown in Table I

**Table I**

| | Mg | Al | K | Fe |
|---|---|---|---|---|
| % by weight | 32 | 12 | 9 | 8 |

### - CO2 capture only test -

To evaluate the sorbent capacity of 20K10FeHT, CO2 capture tests were conducted in a fixed-bed reactor. As shown below, the tests consisted of Pressure Swing Adsorption/Desorption cycles. Tests were performed at a constant temperature, changing the pressure levels, with or without steam supply (WET/DRY).

The evaluation of the individual tests was based on the calculation of the average sorbent capacity of the material of the invention (20K10FeHT), comparing it with that of the hydrotalcite material used for the preparation of the material of the invention (HT).

The following is the procedure performed to carry out the test.

20K10FeHT was brought in its granular form to have particle sizes between 425 µm and 1180 µm.

5 g of granulated 20K10FeHT was loaded into a 1/2" diameter tubular fixed-bed reactor and heat-treated in-situ to remove any passively captured CO2 (during preservation and storage) under a flow of 250 Nml/min of N2 during heating at 10°C/min to the desired temperature of 350°C CO2 capture.

The reactor containing the solid was kept at a temperature of 350°C under N2 pressure up to 10 - 14 bar.

At this point, the material was brought into contact with a current (with or without water vapour) containing CO2, for its capture to take place.

Specifically, the current used was:
- (Dry test) 156.5 Nml/min of CO2 + 250 Nml/min of N2, or
- (Wet test) 156.5 Nml/min of CO2 + 93.5 Nml/min of N2 + 7 mmol/min of H2O.

Once the CO2 capture phase was completed, the material was regenerated by rapid depressurisation under CO2-free gas until ambient pressure was reached (Pressure Swing Adsorption - PSA). Specifically, depressurisation was achieved by opening a reactor valve to the environment, which rapidly vented gas to atmospheric pressure while N2 flowed inside.

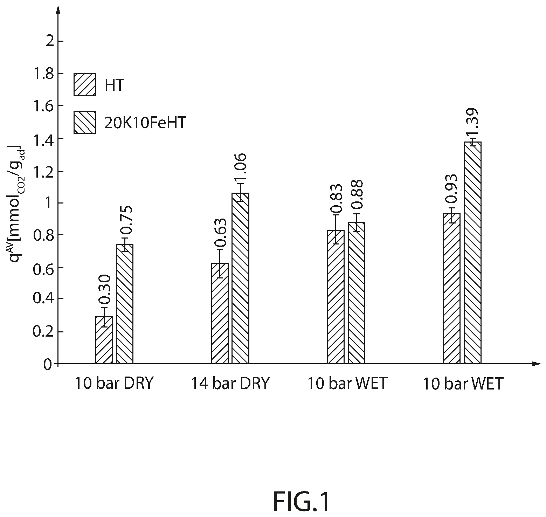

The procedure was repeated five times and the results presented in Figure 1 are an average of the 5 repetitions.

In particular, in the graph in Fig. 1, the results on the y-axis are given in CO2 sorbent capacity values of the fixed-bed material.

As mentioned above, the same procedure was repeated using CH16Al2Mg6O19 hydrotalcite as sorbent material (shown in Fig. 1 as HT) used as starting material for preparing 20K10FeHT.

It is clear from the results shown in Figure 1 that 20K10FeHT exhibited a higher CO2 sorbent capacity than the related hydrotalcite material from which it is derived.

The above demonstrates the fact that the modifications made to the starting hydrotalcite material produced an improved effect on its CO2 sorbent capacity.

### - Sorbent and catalytic activity testing -

To assess the simultaneous sorbent and catalytic capacity of 20K10FeHT, Sorption-Enhanced Water-Gas Shift (SEWGS) tests were performed on a gas mixture simulating the composition of an industrial syngas obtained from steam and dry reforming of biogas (mixture of CO₂ and CH₄) obtained, in turn, from anaerobic digestion of biomass.

The following is the procedure performed to carry out the test.

7.8 g of granular 20K10FeHT as described above was loaded into a 1/2" diameter tubular fixed-bed reactor and was heat-treated to remove any passively captured CO2 (during preservation and storage) and to pre-reduce the Fe-based catalytic active phase. Heat treatment involved the use of a flow of 278 Nml/min H2 mixture (reducing gas) at 10% vol in N2, during heating at 5°C/min until a temperature of 450°C was reached, which was maintained for 30 minutes.

Subsequently, decreasing to a temperature of 350°C, the 20K10FeHT was subjected to a pressure of 7 bar N2.

Under the conditions described above, the 20K10FeHT was then brought into contact with a stream definitely containing water vapour and CO, which in the specific case of this example simulates syngas for carrying out the SEWGS reaction.

Table II shows the composition of the syngas supplied.

**Table II**

| | |
|---|---|
| C02 flow (NmL/min) | 54.0 |
| CO flow (NmL/min) | 12.6 |
| H2 flow (NmL/min) | 110.7 |
| CH4 flow (NmL/min) | 2.7 |
| H2O flow (25°C) (mmol/min) | 10.5 |

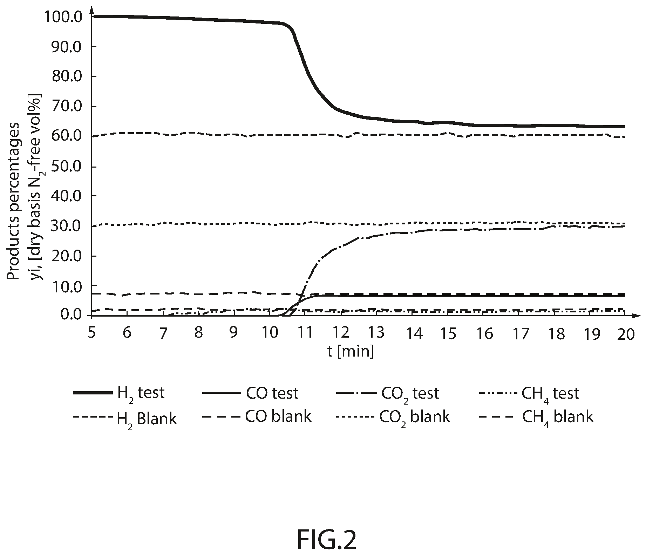

A graph showing the trends of the gases H2, CO, CH4 and CO2 as a function of time is shown in Figure 2.

In particular, in the graph in Fig. 2, gas trends are given in terms of molar fraction values of H2, CO, CO2, CH4 on a dry basis without aggregates, plotted on the y-axis as a function of time (x-axis).

In particular, breakthrough curves for SEWGS operated on an inert bed of zirconia (blank) and on a bed of 20K10FeHT are shown. The blank test represents the behaviour of the experimental system in the absence of active Co2-capturing or active water-gas shift reaction materials and, therefore, its breakthrough curves serve as a reference. Figure 2 shows the trend of the curves from minute 5 of the test, when the gas detection in the analysers is quantitatively significant.

An analysis of the graph in Figure 2 shows that the 20K10FeHT bed ensures the production of pure H2 in test minutes 5 to 7, and high-purity hydrogen (97-98% vol) up to test minute 10. This is due to the presence of 20K10FeHT, which ensures that the WGS reaction and CO2 capture occur simultaneously.

The above shows how this invention succeeds in producing a single material that has both CO2 sorbent and catalyst activity, thanks to the presence of Mg and Al oxides of hydrotalcite origin to which K and Fe are added.

In particular, the formulation of the material according to this invention has as essential features the magnesium/aluminium ratio (which influences the CO2 sorbent capacity), the amount of potassium carbonate (which influences CO2 capture and can have catalytic promoting effects) and the amount of iron (as active catalytic phase).

The material that this invention concerns has an advantageous, but not exclusive, application in heterogeneous catalysis reactions of chemical reactions also promoted by simultaneous CO2 capture (sorption-enhancement) applied to H2 production from renewable and non-renewable sources. In addition, the 20K10FeHT material proved capable of operating the SEWGS process very effectively even at relatively low pressures (7 bar), with associated operating cost advantages for PSA-type applications.

Finally, it should be considered that the method of synthesis of the invention due to its technical characteristics allows industrial scalability without risk for either the environment or operators.

## Claims

1. A method for the production of bifunctional particulate solid material with CO2 sorbent and catalytic activity specifically for the Water-Gas Shift reaction;
said method being **characterized by** the fact that it comprises the following phases in succession:
- a first calcination phase, in which a hydrotalcite material, with a molar ratio of Mg/Al between 2 and 4, undergoes a calcination treatment at a temperature between 400 and 500°C;
- a cooling phase, in which the hydrotalcite material coming from the calcination phase is brought to a temperature between 10 - 30°C in a humidity condition between 30-0% RH;
- a wet-impregnation phase, in which the hydrotalcite material from the cooling phase is mixed in water with K2CO3 and an Fe salt at a temperature between 30 and 90 °C; K2CO3 being added in a quantity of between 10 and 25% by weight with respect to the weight of the hydrotalcite material from the cooling phase, and said iron salt being added in a quantity such that the elemental mass of Fe is between 1 and 15% by weight with respect to the weight of the hydrotalcite material from the cooling phase;
- a drying phase of the material coming from said wet-impregnation phase;
- a second calcination phase, in which the material coming from the drying phase is subjected to a temperature of between 400 and 500°C.

2. The method according to claim 1, **characterized in that** said first and second calcination phases involve a heating rate of between 1 and 10°C/min.

3. The method according to claim 1 or 2, **characterized in that** said cooling phase comprises:
- a first cooling sub-phase, in which the oxides from the calcination phase are brought to a temperature of between 100 and 150°C;
- a second cooling sub-phase, in which the oxides from the first cooling sub-phase are brought to a temperature of between 10 - 30°C in an environment with a RH of between 30-10%.

4. The method according to one of the preceding claims, **characterized in that** said wet-impregnation phase comprises a first sub-phase, in which K2CO3 and the Fe salt are dispersed in water and mixed together at a temperature between 5 and 95 °C, and a second sub-phase in which the calcined hydrotalcite solid from the cooling phase is added to the solution coming from the first sub-phase.

5. The method according to one of the preceding claims, **characterized in that** in said drying phase the material is subjected to a temperature between 100 and 130 °C for a time between 21 and 48 h.

6. The method according to one of the preceding claims, **characterized in that** in said wet-impregnation phase the quantity by weight of water is between 6 and 10 times the quantity by weight of the calcined hydrotalcite material.

7. The method according to one of the preceding claims, **characterized in that** said Fe salt is ferric nitrate.

8. The method according to one of the preceding claims, **characterized in that** it comprises an activation phase, in which the material coming from said second calcination phase is subjected to the action of a reducing gas at a temperature between 300 and 500 °C.

9. The method according to claim 8, **characterized in that** in said activation phase said reducing gas is H2 (possibly diluted in inert gas) and the temperature between 300-500 °C is reached at a speed between 1-20 °C/min.

10. A bifunctional particulate solid material with CO2 sorbent and catalytic activity, specifically for the Water-Gas Shift reaction; said particulate solid material being **characterized in that** it consists of xMg:yAl:zK:wFe where, x is between 25 and 45% by weight; y is between 8 and 18% by weight; z is between 4 and 12% by weight; w is between 0.8 and 12% by weight.
